Europäisches Patentamt

European Patent Office

Office européen des brevets

(11) Veröffentlichungsnummer: **0 355 309**
**A2**

## (12) EUROPÄISCHE PATENTANMELDUNG

(21) Anmeldenummer: 89111351.6

(51) Int. Cl.⁴: **G11B 33/02 , G11B 31/00**

(22) Anmeldetag: 22.06.89

(30) Priorität: 23.08.88 DE 3828499

(43) Veröffentlichungstag der Anmeldung:
28.02.90 Patentblatt 90/09

(84) Benannte Vertragsstaaten:
**AT DE FR IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Nandzik, Andreas c/o GRUNDIG**
**E.M.V.**
**Max Grundig holländ. Stiftung & Co KG**
**Kurgartenstrasse 37 D-8510 Fürth/Bay(DE)**

(54) **Batteriegespeistes und am Körper eines Benutzers leicht befestigbares Gerät zur Wiedergabe von elektroakustischen Signalen.**

(57) Es ist ein batteriebetriebenes und am Körper eines Benutzer leicht befestigbares Gerät zur Wiedergabe von elektroakustischen Signalen beschrieben, wobei das Gerät als Rundfunkgerät, als Cassettengerät, als CD-Gerät oder aus einer Kombination dieser Geräte bestehen kann. Die Gehäuseform des Gerätes ist derart gestaltet, daß diese der Körperform eines Benutzers angepaßt ist, und eine dem Gerät zugeordnete und bedarfsweise in Funktions bringbare Haspel zum Aufwickeln des Kopfhörerkabels aufweist.

FIG.1

EP 0 355 309 A2

## BATTERIEBETRIEBENES UND AM KÖRPER EINES BENUTZERS LEICHT BEFESTIGBARES GERÄT ZUR WIEDERGABE VON ELEKTROAKUSTISCHEN SIGNALEN

Die Erfindung betrifft ein batteriebetriebenes und am Körper eines Benutzers leicht befestigbares Gerät zur Wiedergabe von elektroakustischen Signalen, wobei die Signale von einem miniaturisierten Rundfunkgerät, einem Cassettengerät, einem CD-Gerät oder aus einer Kombination dieser Geräte entnommen und über einen Kleinkopfhörer mit Kabel wiedergegeben werden.

Es sind am Körper eines Benutzers leicht befestigbare Geräte zur Wiedergabe von Hörereignissen bekannt, die vorwiegend aus einem Rundfunkgerät oder aus einem Cassettengerät oder aus einer Kombination beider Geräte bestehen und das Abhören über Kopfhörer erfolgt. So ist aus der deutschen Patentschrift DE 28 13 000 eine elektroakustische Anordnung für die hochwertige stereophone Wiedergabe von Hörereignissen bekannt, bei der verschiedene Geräte dieser Art, insbesondere ein Tonbandcassettengerät, am Gurtband eines Benutzers befestigt ist und die akustische Wiedergabe über einen Stereo-Kopfhörer erfolgt. Der Kopfhörer ist hierbei über ein Kabel mit dem am Gurtband befestigten Wiedergabegerät verbunden.

Für den Benutzer ist es vorteilhaft, wenn die am Körper befindlichen Geräte leicht und kaum wahrnehmbar sind und wenn die Geräte bei abgenommenem Kopfhörer möglichst eine Einheit bilden ohne daß der Benutzer in seiner Beweglichkeit gehindert wird.

Die der Erfindung zugrundeliegende Aufgabe besteht nun darin, ein batteriebetriebenes und am Körper eines Benutzers leicht befestigbares Gerät zur Wiedergabe von elektroakustischen Signalen zu schaffen, das sich an die Körperform eines Benutzers möglichst gut anschmiegt, während des Tragens leicht bedienbar ist und auch bei abgenommenem Kopfhörer als Geräteeinheit (Gerät + Kopfhörer) ohne Behinderung durch den abgesetzten Kopfhörer bzw. durch das Kopfhörerkabel am Körper zu tragen oder aufzubewahren ist.

Diese Aufgabe wird durch die kennzeichnenden Merkmale im Anspruch 1 gelöst.

Die Unteransprüche zeigen vorteilhafte Ausgestaltungen der Erfindung.

Die Erfindung wird nachfolgend anhand der Zeichnungen erläutert.

Figur 1 ist eine perspektivisch gezeichnete Darstellung eines am Körper eines Benutzers befestigbaren Rundfunkgerätes ohne Kleinkopfhörer,

Figur 2 zeigt eine Darstellung ähnlich der Figur 1, jedoch als Cassettengerät ohne Kopfhörer,

Figur 3 zeigt eine Darstellung ähnlich der Figuren 1 und 2, jedoch als CD-Gerät ohne Kopfhörer,

Figur 4 ist eine perspektivische Darstellung des Gerätes nach Figur 1, jedoch ist der rückwärtige Teil des Gerätes gezeigt,

Figur 5 ist eine Darstellung des Gerätes ähnlich der Figur 4, jedoch mit einem Kleinkopfhörer und einer aus dem Gerät herausgezogenen Haspel,

Figur 6 ist eine Darstellung ähnlich der Figur 5, jedoch mit auf die Haspel aufgewickeltem Kabel des Kleinkopfhörers,

Figur 7 ist eine Darstellung des Gerätes ähnlich der Figur 6, jedoch mit einer in das Gerät einsteckbaren Haspel bei aufgewickeltem Kabel des Kleinkopfhörers,

Figur 8 ist eine Darstellung ähnlich der Figur 5, jedoch mit freigegebenem Batteriefach bei aus dem Gerät herausgezogener Haspel,

Figur 9 ist eine Darstellung des Gerätes ähnlich der Figur 7, jedoch mit als Drahtbügel geformtem Doppelclip,

Figur 10 ist eine perspektivische Darstellung des Gerätes als Draufsicht auf den rückwärtigen Teil mit in den Clip eingehängtem Traggurt.

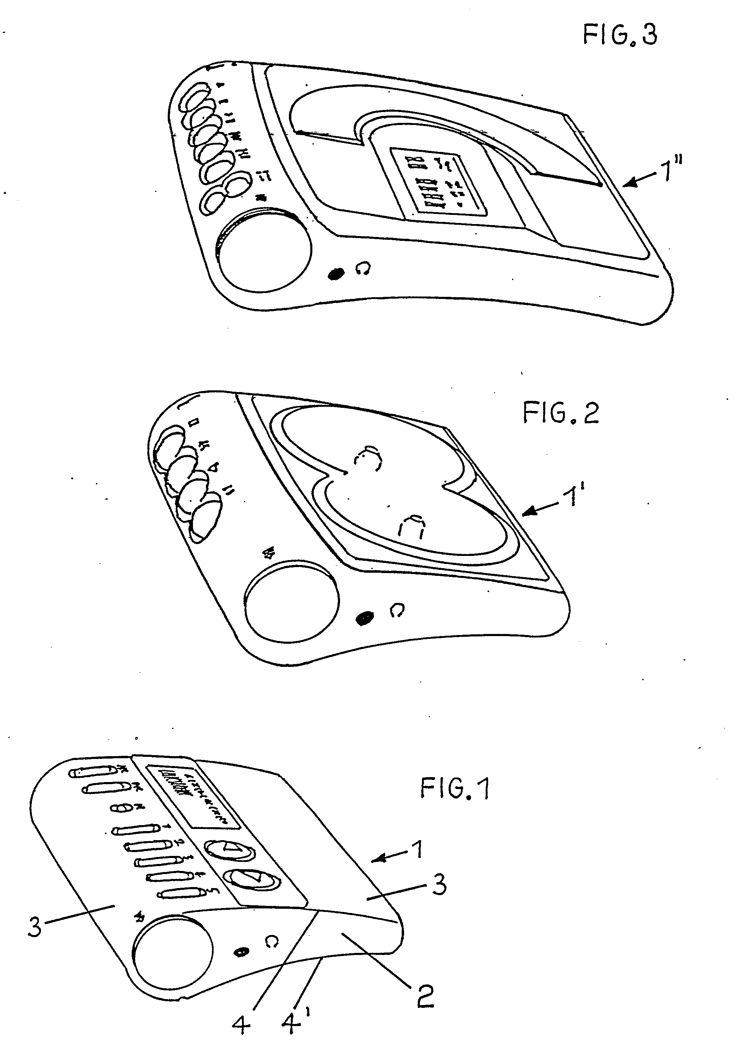

Die Figur 1 zeigt in perspektivischer Darstellung ein Gerät 1 in Form eines miniaturisierten Rundfunkgerätes, das in seinem Deckelteil die für ein Rundfunkgerät erforderlichen Bedienelemente aufweist. Der für das Gerät erforderliche Kleinkopfhörer ist der Einfachheit halber in dieser Figur nicht näher dargestellt. Das Gehäuse 2 des Gerätes weist eine rechteckige Grundform auf, wobei das Gehäuse an einer Längsseite eine zylinderförmig gewölbtes und an der gegenüberliegenden Längsseite eine kleinere zylinderförmig gewölbtes Außenwandteil 3, 3′ besitzt und beide Außenwandteile 3, 3′ über ein in gleicher Richtung leicht gekrümmtes Deckel- und Bodenteil 4, 4′ verbunden sind. Im Deckelteil 4 sind auch bedarfsweise die für die Senderanzeige eines Gerätes erforderlichen Anzeigeelemente angeordnet. Die Krümmung des nach innen gewölbten Bodenteils 4′ ist so gewählt, daß sich das Gehäuse des Gerätes der Körperform eines Benutzers anpaßt, so z. B., wenn der Benutzer das Gerät am Bundgürtel eingehängt trägt.

Die Figuren 2 und 3 zeigen je ein Gerät 1′, 1″, das jeweils in seiner Form der des Gerätes nach Figur 1 entspricht, jedoch einmal als Cassettengerät oder als CD-Gerät ausgebildet ist.

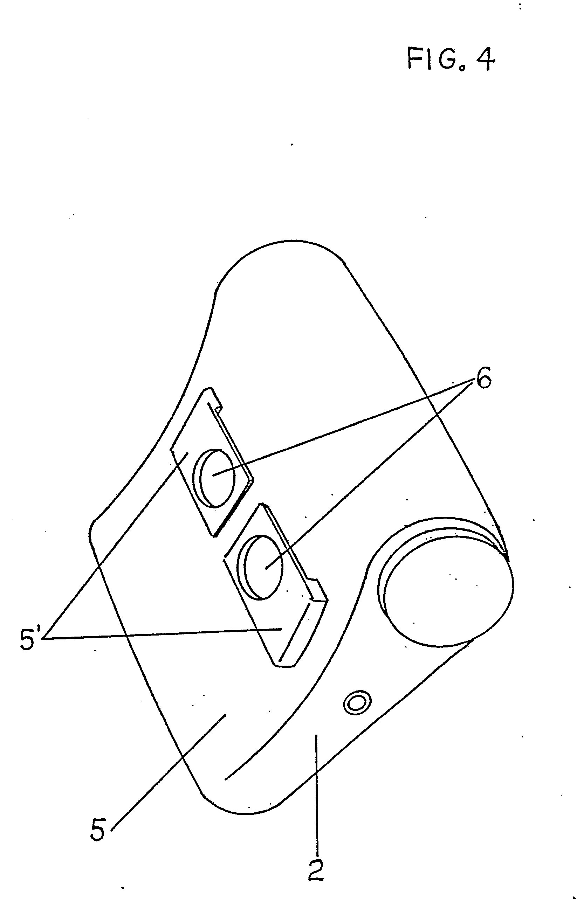

In der Figur 4 ist die Rückseite des Gehäuses 2 dargestellt, wobei im wesentlichen der für die Befestigung des Gerätes am Körper des Benutzers erforderliche Doppelclip 5 zu erkennen ist. Der Doppelclip ist aus Kunststoff gefertigt. Der Clip weist Ausnehmungen 6 auf, in die die beiden Hörkapseln 7′ eines Kleinkopfhörers 7 bei Nichtbenutzung des Gerätes zur Aufbewahrung eingesetzt werden können.

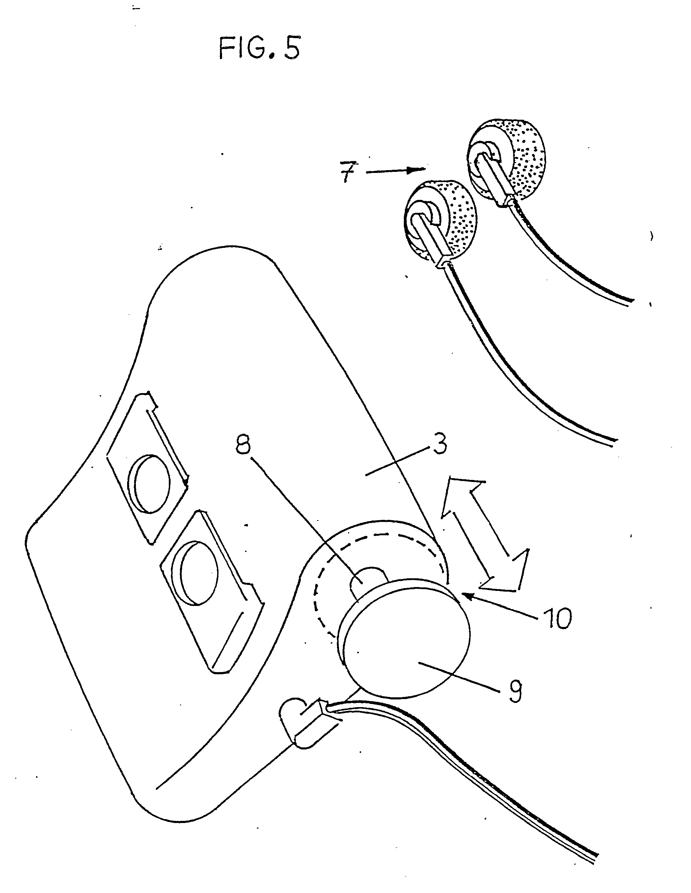

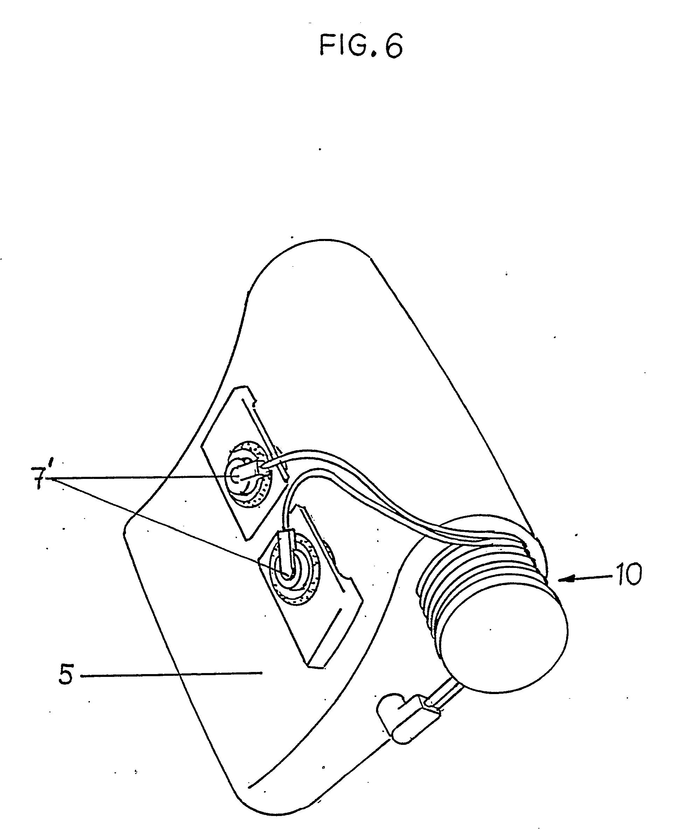

Die Figur 5 zeigt eine Ansicht ähnlich der Figur 4, jedoch mit einem Kleinkopfhörer 7. Weiterhin ist in der dargestellten Zeichnung zu erkennen, daß in dem Teil des Gehäuses, das durch das größere zylinderförmig gewölbte Außenwand gebildet wird, ein Wickeldorn 8 mit angesetztem Außenflansch 9 aus dem Gehäuse herausgezogen ist. Der Wickeldorn mit Außenflansch und die Seitenwand des Gehäuses bilden so eine Art Haspel, auf die das Kabel des Kleinkopfhörers bedarfsweise aufgewickelt werden kann. Das auf die Haspel 10 aufgewickelte Kabel des Kleinkopfhörers und das Einstecken der beiden Hörkapseln des Kleinkopfhörers in die Ausnehmungen des Doppelclips ist aus der Figur 6 zu erkennen.

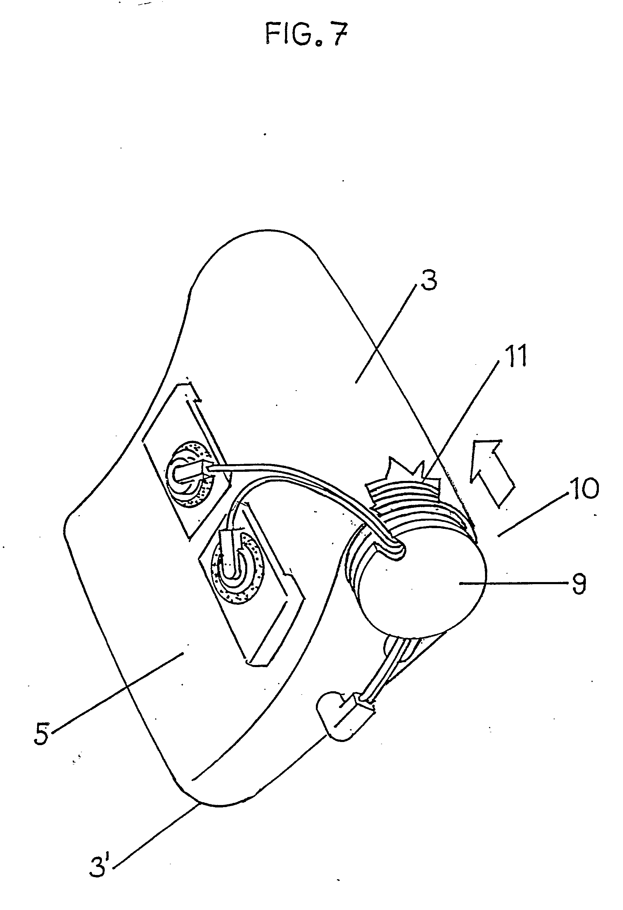

Die Figur 7 zeigt ein Beispiel einer Haspel und einer entsprechend ausgebildeten Seitenwand des Gehäuses, bei der die Haspel aus einem Außenflansch 9 und einem Innenflansch 11 besteht. In der dargestellten Zeichnung ist die zylinderförmig gewölbte Außenwand aufgebrochen gezeichnet, damit zu erkennen ist, daß die Seitenwand des Gehäuses eine zylinderförmige Vertiefung aufweist, in die die Haspel mit dem aufgewickelten Kabel des Kleinkopfhörers hineingeschoben werden kann. Im gezeigten Beispiel ist die Haspel erst zur Hälfte in das Gerätegehäuse eingeschoben. Sofern die Haspel 10 vollständig in das Gerätegehäuse eingeschoben ist, schließt der Außenflansch 9 die Öffnung im Seitenteil des Gehäuses ab. Die Kabelverbindung zwischen Gerät und den beiden Hörkapseln kann über Öffnungen im Außenflansch der Haspel oder im Seitenteil des Gehäuses austreten.

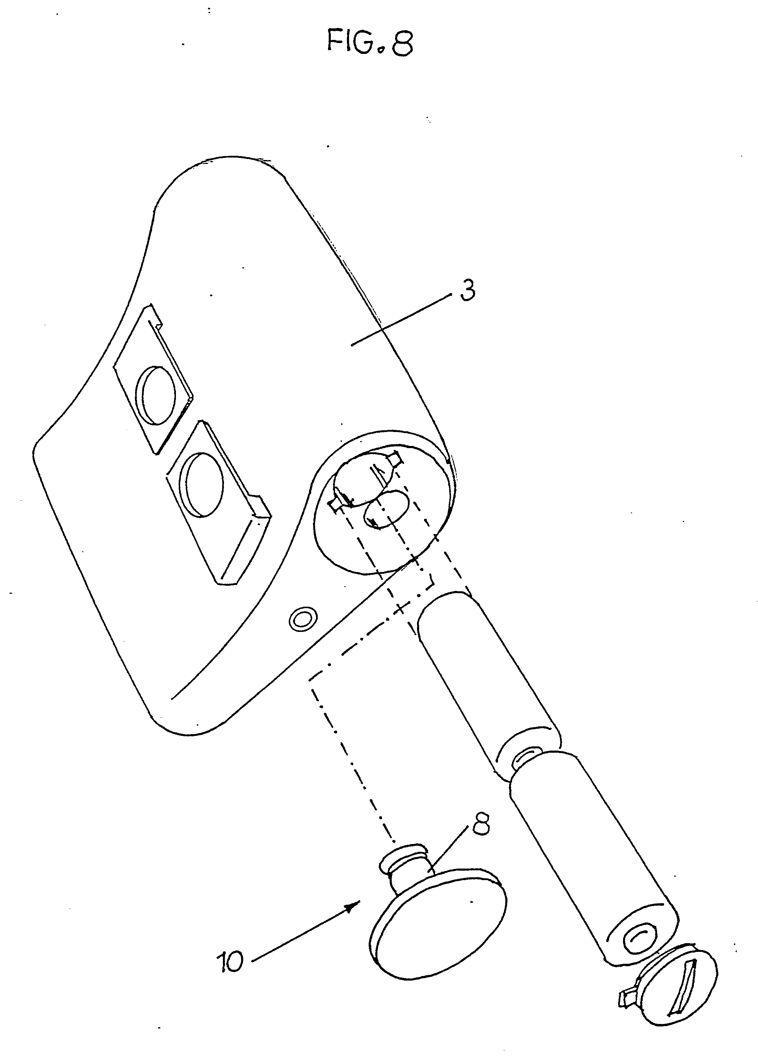

Aus der Figur 8 ist zu erkennen, wie in dem Gehäuseteil mit dem größeren zylinderförmig gewölbten Außenwandteil ein Batterieaufnahmefach eingesetzt sein kann. Das Seitenteil weist hierzu in dem durch den Außenflansch der Haspel abgedeckten Bereich eine runde Öffnung mit einer eingesetzten zylinderförmigen Röhre auf, in die eine oder mehrere kleine Rundbatterien eingesteckt werden können, und über eine Verschlußkappe kontaktiert und gehalten werden. Da die Zugänglichkeit für das Batterieaufnahmefach nur über die Haspel 10 möglich ist, ist der Wickeldorn 8 der Haspel derart ausgebildet, daß der Wickeldorn mit Flansch durch kräftiges ziehen über seine äußere Raststellung hinaus aus dem Gerät entfernt werden kann.

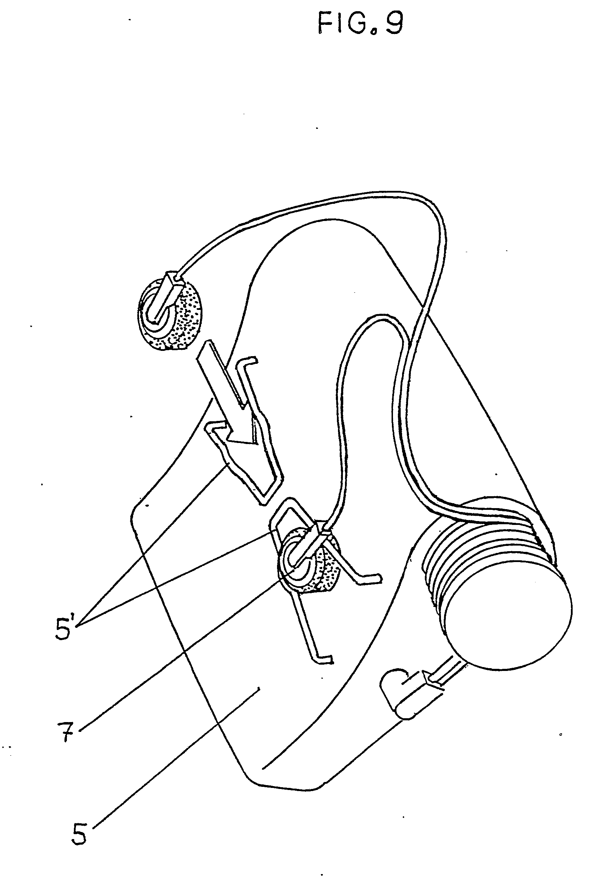

Die Figur 9 zeigt einen Doppelclip, der als Drahtbügel ausgeführt ist und die Form einer Klammer aufweist. Wie aus der Figur ersichtlich, kann in den Drahtbügel die Hörkapsel eines Kleinkopfhörers klemmend eingeschoben werden.

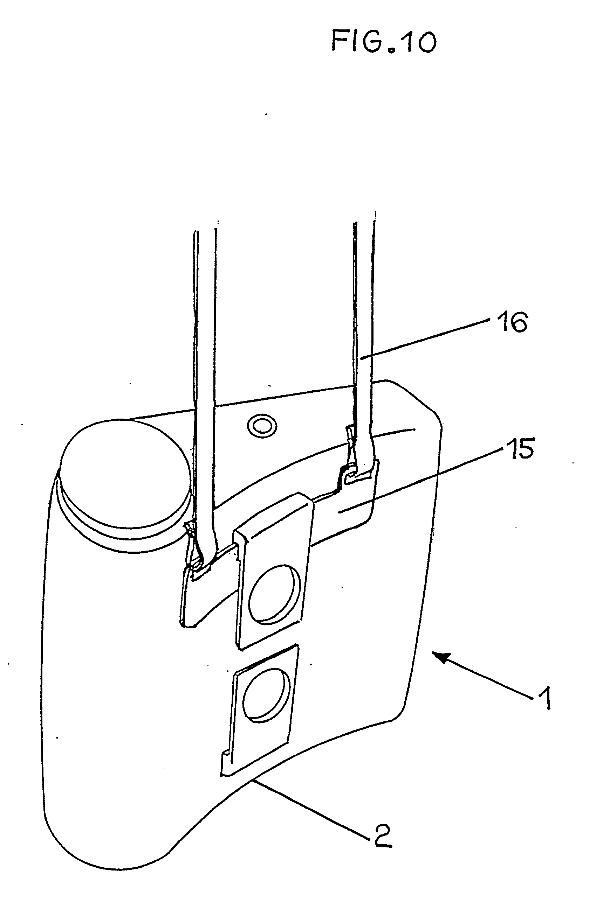

Die Figur 10 zeigt, wie über einen Teil des Doppelclips ein Halteteil einzuschieben ist, an den ein Traggurt zum trabaren Umhängen des Gerätes befestigt ist. Durch den Doppelclip kann das Gerät an jeder beliebigen Stelle des Körpers eingehängt werden und gewährleistet trotzdem eine einwandfreie Bedienungszugänglichkeit.

1, 1', 1" Gerät
2 Gehäuse
3 zylinderförmig gewölbtes Außenwandteil
3' kleinerees zylinderförmiges Außenwandteil
4 Deckelteil
5 Bodenteil
5' Doppelclip
6 Ausnehmung
7 Kleinkopfhörer
7' Hörkapsel
8 Wickeldorn
9 Außenflansch
10 Haspel
11 Innenflansch
12 Batterieaufnahmefach
13 Öffnung (für Batterie)
14 Verschlußkappe
15 Halteteil
16 Traggurt

**Ansprüche**

1. Batteriebetriebenes und am Körper eines Benutzers leicht befestigbares Gerät zur Wiedergabe von elektroakustischen Signalen, wobei die Signale von einem miniaturisierten Rundfunkgerät, einem Cassettengerät, einem CD-Gerät oder aus einer Kombination dieser Geräte entnommen und über einen Kleinkopfhörer mit Kabel wiedergegeben werden, **dadurch gekennzeichnet,**

a) daß das Gerät (1, 1', 1") ein aus einer rechteckigen Grundform bestehendes Gehäuse (2) aufweist, das an einer Längsseite ein zylinderförmig gewölbtes und an der gegenüberliegenden Längsseite ein kleineres zylinderförmig gewölbtes Außenwandteil (3, 3') besitzt, wobei beide Außenwandteile über ein in gleicher Richtung leicht gekrümmtes Deckel- und Bodenteil (4, 5) verbunden sind,

b) daß die Wölbung des Bodenteils (5) der menschlichen Körperform zum Befestigen des Gerätes am Gürtelbund angepaßt ist und zur Halterung über das Bodenteil einen Doppelclip (5') aufweist,

c) daß der Gehäuseteil mit dem größeren zylinderförmig gewölbten Außenwandteil (3) eine das Kopfhörerkabel aufnehmende Haspel (10) und ein Batterie-Aufnahmefach aufweist,

d) daß das gewölbte Deckelteil (4) im wesentlichen die Bedienungselemente und bedarfsweise einen Tonträger (Cassetten oder CD-Platte) aufnimmt.

2. Batteriebetriebenes und am Körper eines Benutzers leicht befestigbares Gerät nach Anspruch 1, **dadurch gekennzeichnet**, daß die Haspel (10) aus einem aus dem Gehäuse herausziehbaren Wickeldorn (8) mit Außenflansch (9) besteht, auf dem das Kopfhörerkabel außerhalb des Gehäuses aufzuwickeln ist.

3. Batteriebetriebenes und am Körper eines Benutzers leicht befestigbares Gerät nach Anspruch 1, **dadurch gekennzeichnet**, daß die Haspel (10) aus einem Wickeldorn (8) mit Außen- und Innenflansch (9, 11) besteht, und daß die Haspel mit oder ohne aufgewickeltem Kopfhörerkabel in das Gehäuse so einzustecken ist, daß nur der Außenflansch (9) als Griffscheibe sichtbar ist.

4. Batteriebetriebenes und am Körper eines Benutzers leicht befestigbares Gerät nach einem der bisherigen Ansprüche, **dadurch gekennzeichnet**,
daß das Batterie-Aufnahmefach (12) mit Verschlußkappe (14) durch den Außenflansch (9) der Haspel (10) abgedeckt ist und erst nach vollständigem Herausziehen der Haspel aus dem Gehäuse zugänglich ist.

5. Batteriebetriebenes und am Körper eines Benutzers leicht befestigbares Gerät nach einem der bisherigen Ansprüche, **dadurch gekennzeichnet**,
daß der Doppelclip (5') aus Kunststoff gefertigt ist und Ausnehmungen (6) zur Aufnehmung der beiden Hörkapseln (7) des Kleinkopfhörers (7) aufweist.

6. Batteriebetriebenes und am Körper eines Benutzers leicht befestigbares Gerät nach einem der bisherigen Ansprüche, **dadurch gekennzeichnet**,
daß der Doppelclip (5') als Drahtbügel ausgeführt ist und zusätzlich als Halteklammer zur Aufnahme der beiden Hörkapseln des Kleinkopfhörers dient.

7. Batteriebetriebenes und am Körper eines Benutzers leicht befestigbares Gerät nach einem der bisherigen Ansprüche, **dadurch gekennzeichnet**,
daß in den Doppelclip (5') ein Halteteil (15) einschiebbar ist, und daß in das Halteteil (15) ein Traggurt (16) eingehängt ist.

FIG.3

FIG.2

FIG.1

FIG. 4

FIG. 5

FIG.6

# FIG. 7

FIG. 8

# FIG. 9

5'

7

5

FIG.10